# EUROPÄISCHE PATENTSCHRIFT

(11) **EP 2 928 055 B1**
(45) Veröffentlichungstag und Bekanntmachung des Hinweises auf die Patenterteilung: **06.02.2019**
(21) Anmeldenummer: 14001185.9
(22) Anmeldetag: 31.03.2014
(51) Int. Cl.: H02M 1/12, H02M 7/483

(54) **Modularer Stromrichter und Verfahren zur Erzeugung einer sinusförmigen Ausgangsspannung mit reduziertem Oberschwingungsgehalt**
Modular power converter and method for generating a sinusoidal output voltage with reduced harmonics
Convertisseur de courant modulaire et procédé de production d'une tension de sortie sinusoïdale à harmoniques réduites

(43) Veröffentlichungstag der Anmeldung: 07.10.2015
(73) Patentinhaber: Siemens Aktiengesellschaft, 80333 München (DE)
(72) Erfinder: Weis, Benno, 91334 Hemhofen (DE)

(56) Entgegenhaltungen:
- WO-A1-2011/124260
- US-A- 5 886 504

## Beschreibung

Die Erfindung betrifft ein Verfahren zum Betreiben eines modularen Stromrichters mit einer Vielzahl von Submodulen, wobei der modulare Stromrichter an mindestens einem wechselspannungsseitigen Anschluss eine Wechselspannung durch Schalthandlungen von Leistungshalbleitern der Submodule erzeugt.

Stromrichter werden dazu verwendet, elektrische Leistung bezüglich Spannungshöhe, Stromhöhe, Frequenz und Phasenlage umzuwandeln. Stromrichter für die Umwandlung von Wechselspannung in Gleichspannung bzw. von Wechselstrom in Gleichstrom werden als Gleichrichter bezeichnet. Demgegenüber bezeichnet man Stromrichter für die Umwandlung von Gleichspannung in Wechselspannung bzw. von Gleichstrom in Wechselstrom als Wechselrichter. Stromrichter für die Umwandlung von Leistungen mit Spannungen/Strömen einer Frequenz in eine andere Frequenz werden als (Frequenz-)Umrichter bezeichnet.

Stromrichter werden eingesetzt, um elektrische Maschinen und Motoren gezielt mit elektrischer Energie zu versorgen. Dadurch sind diese elektrische Maschinen und Motoren durch die Stromrichter steuerbar und regelbar. Ein weiteres Anwendungsgebiet ist die Steuerung von Energieflüssen, die Kompensation von Oberschwingungen und das Bereitstellen von Blindleistung in Energieversorgungsnetzen. Darüber hinaus sind Stromrichter an der verlustarmen Übertragung von Energie mittels Hochspannungsgleichstromübertragung (HGÜ) beteiligt.

Ein Frequenzumrichter mit Spannungszwischenkreis versorgt einen Motor mit einer gepulsten Spannung, die die Grundschwingung der Motorspannung in ihrem Pulsmuster enthält. Die hochfrequenten Anteile in der Spannung erzeugen Ableitströme zur Bezugserde, die als Störströme im System vorhanden sind. Um diese Störströme zu begrenzen, müssen Filterschaltungen, sogenannte EMV-Filter, eingesetzt werden.

Nach einem ersten Stand der Technik wird dieses Problem dadurch gelöst, dass der Umrichter als Multilevel-Topologie ausgeführt wird. In einer bevorzugten Ausführungsform wird dabei eine Umrichterphase nicht durch einen einzelnen Halbleiter oder eine Reihenschaltung von Halbleitern ausgeführt, sondern durch eine Anzahl von in Reihe geschalteten Zellen, die auch als Submodule bezeichnet werden. Die Ausgangsspannung der Phase ist dabei davon abhängig, wie viele Zellen des oberen Brückenzweiges und wie viele Zellen des unteren Brückenzweiges zugeschaltet werden. Ein Brückenzweig wird auch als Stromrichterventil bezeichnet. Ein solcher Frequenzumrichter ist aus der DE 101 03 031 A1 sowie aus der Veröffentlichung "Modulares Stromrichterkonzept für Netzkupplungsanwendung bei hohen Spannungen", von Rainer Marquardt, Anton Lesnicar und Jürgen Hildinger, abgedruckt im Tagungsband der ETG-Tagung 2002, bekannt. Die Ausgangsspannung entspricht einer Spannung am wechselspannungsseitigen Anschluss des Umrichters und ist dann nicht mehr eine gepulste Spannung zwischen den beiden DC-Potenzialen, sondern eine gestufte Spannung, wobei die Stufenhöhe mit größerer Anzahl von Zellen kleiner wird.

Der Nachteil dieser Ausführungsformen in Bezug auf EMV-Störströme liegt darin, dass auch bei vielen Submodulen noch eine endliche Stufenhöhe verbleibt. Diese kleine Stufenhöhe reduziert zwar die Störströme proportional zur Anzahl der Stufen, zur Einhaltung von EMV-Grenzwerten sind jedoch sehr kleine Störströme gefordert. Um deren Höhe zu unterschreiten, insbesondere ohne zusätzlichen EMV-Filter, sind extrem viele Stufen erforderlich. Um den Störstrom zu halbieren (6dB Reduzierung), ist eine Verdopplung der Stufenanzahl erforderlich, was bei hohen Stufenzahlen einen sehr hohen Aufwand bedeutet.

Des Weiteren sind Geräte bekannt, die als Linearverstärker arbeiten und in der Lage sind, am Umrichterausgang eine exakte Sinusspannung bereit zu stellen. Derartige Geräte sind als lineare Netznachbildungen bekannt. Sie bestehen zumeist aus einer Brückenschaltung von MOSFETs. Allerdings werden diese MOSFETs nicht geschaltet, sondern im Linearbetieb angesteuert, wodurch jede beliebige Spannung am Umrichterausgang eingestellt werden kann.

Der Vorteil dieser Variante liegt darin, dass die Störströme aufgrund des echt sinusförmigen Verlaufs der Ausgangsspannung minimal sind. Allerdings ist die Verlustleistung dieser Lösung sehr hoch, da an den MOSFETs ständig hohe Spannung anliegt, während sie Strom führen. Deshalb liegt der Wirkungsgrad solcher Geräte unter 30%.

Aus der WO 2011/124260 A1 ist ein Umrichter für die Anwendung in einer Hochspannungsgleichstromübertragung oder einer Blindleistungskompensation bekannt. Dieser Umrichter umfasst mindestens einen Kettenumrichter, der zwischen AC und DC Netzwerk angeordnet ist. Der Kettenumrichter beinhaltet eine erste und eine zweite Gruppe von Modulen, die in Serie angeordnet sind, wobei die einzelnen Module eine Vielzahl von primären Schaltelementen aufweisen, die mit mindestens einem Energiespeicher verbunden sind. Die primären Schaltelemente sind dabei derart steuerbar, dass die Kette von Modulen in Reihe eine gestufte variable Spannungsquelle bereitstellen kann.

Aus der US 5 886 504 ist ein verbessertes Verfahren und ein System zur Erhöhung der effektiven elektrischen Belastbarkeit eines Leistungswandlers bekannt. Mögliche Schäden aufgrund von Stromspitzen bei Laständerungen werden durch Erfassen einer bevorstehenden Überstrombedingung vermieden. Dabei wird der Output des Systems um einen vorbestimmten Betrag oder auf einen vorbestimmten Pegel abgesenkt und dann allmählich erhöht bis die Ausgänge des Systems wieder die gewünschte Betriebsbedingung erreicht haben. Eine solche Steuerung kann beeinflusst werden durch eine Variation der Drosseleinstellung, um die Rotordrehzahl einzustellen, und um die DC-Schienen-Spannungsebene zu regeln.

Der Erfindung liegt die Aufgabe zugrunde, ein Verfahren zur Minimierung von Störströmen eines modularen Stromrichters anzugeben, das sowohl geringe Verluste verursacht als auch einfach und zuverlässig durchführbar ist.

Diese Aufgabe wird durch ein Verfahren zum Betreiben eines modularen Stromrichters mit einer Vielzahl von Submodulen gemäß Anspruch 1 und einem hierzu korrespondierenden modularen Stromrichter gemäß Anspruch 6 gelöst. Vorteilhafte Ausführungsformen sind in den abhängigen Ansprüchen definiert.

Der Erfindung liegt die Erkenntnis zugrunde, dass die Minimierung der Störströme dadurch erreicht, dass eine Multilevel-Topologie verwendet wird, wobei jedoch zumindest eine der in den Stromrichterventilen in Reihe geschalteten Submodule im Linearbetrieb arbeitet. Damit werden bei einem Stromrichterventile mit n in Reihe geschalteten Zellen der Anteil von (n-1)/n der Ausgangsspannung durch geschalteten Betrieb verlustarm realisiert, während der Anteil von 1/n im Linearbetrieb eingestellt wird.

Mit dieser Lösung ist es möglich, wie bei dem Linearverstärker, am wechselspannungsseitigen Anschluss, der den Stromrichterausgang darstellt, jeden beliebigen Spannungswert exakt einzustellen. Da jedoch nur eine Zelle im Linearbetrieb arbeitet, entsteht auch nur in dieser einen Zelle die relativ hohe Verlustleistung. Die Verlustleistung ist deutlich geringer als bei dem Linearverstärker nach Stand der Technik, weil das einzelne Submodul nur einen Bruchteil der Zwischenkreisspannung aufnimmt.

Das erfindungsgemäße Verfahren kann sowohl für Stromrichter auf der Netzseite als auch auf der Motorseite verwendet werden. Die Erfindung ist anwendbar für Frequenzumrichter, die exakt sinusförmige Ausgangsspannung liefern sollen. Sie ist ebenfalls anwendbar für Linearverstärker, deren Verluste drastisch reduziert werden sollen.

Bei einer vorteilhaften Ausgestaltungsform werden die im Linearbetrieb betriebenen Submodule derart angesteuert, dass die Spannung am wechselspannungsseitigen Anschluss einen sinusförmigen Zeitverlauf annimmt. Der besondere Vorteil besteht darin, dass der Sinusverlauf für viele Anwendung benötigt wird und in der Vergangenheit durch mehr oder weniger aufwändige und kostenintensive Filterschaltungen realisiert werden musste. Auf diese Filterschaltung kann nun verzichtet werden. Beim Anschluss beispielsweise an ein Energieversorgungsnetz treten aufgrund des guten sinusförmigen Verlaufs der Ausgangsspannung der Stromrichterschaltung keine hochfrequenten störenden Ströme auf. Genauso verhält es sich bei an der Stromrichterschaltung angeschlossenen Lasten. Auch diese sind teilweise empfindlich gegenüber Oberschwingungen, die mit der erfindungsgemäßen Stromrichterschaltung nicht weitestgehend unterdrückt und teilweise komplett beseitigt werden.

Bei einer weiteren vorteilhaften Ausgestaltungsform wird eine Zuordnung, welches Submodul im Linearbetrieb betrieben wird, nach wiederkehrenden Zeitpunkten durch mindestens ein Kriterium neu vorgenommen. Liegt das Entwicklungsziel darin, alle Submodule gleichartig auszuführen, um z.B. einen hohen Grad an Gleichteiligkeit im Stromrichter zu erreichen, so können abwechselnd verschiedene Submodule linear geregelt werden, um die Verlustleistung der Linearregelung möglichst gleichmäßig auf alle Submodule zu verteilen. Dabei können die wiederkehrenden Zeitpunkte sich aus einer zyklisch sich wiederholenden Überprüfung ergeben. Dabei werden zu bestimmten Zeitpunkten, im gleichen zeitlichen Abstand zueinander Betriebsparameter der Submodule wie beispielsweise die derzeitige Temperatur der Leistungshalbleiter, insbesondere an der Sperrschicht, und/oder die derzeitige oder prognostizierte Verlustleistung als Kriterium herangezogen um eine Entscheidung zu treffen, welches Submodul ab einen bestimmten Zeitpunkt im Linearbetrieb betrieben werden soll. Neben einer zyklischen Überprüfung kann diese auch ereignisgesteuert, beispielsweise durch Überschreiten von Temperaturwerten gesteuert werden.

Bei einer weiteren vorteilhaften Ausgestaltungsform erfolgt die Zuordnung durch das mindestens eine Kriterium derart, dass die Temperatur und/oder die Verlustleistung der Submodule im zeitlichen Mittel den gleichen Wert annehmen. Ziel der gleichmäßigen Verteilung der Verlustenergie auf alle Submodule ist es, die Erwärmung der Submodule im zeitlichen Mittel gleich zu gestalten, so dass jedes Modul im Betrieb die gleiche Belastung erfährt. Damit ist es möglich das Maximum an Lebensdauer der einzelnen Submodule sicherzustellen. Ein frühzeitiger Ausfall von Modulen wird dadurch vermieden.

Bei einer weiteren vorteilhaften Ausgestaltungsform wird für die Zuordnung, welches Submodul als nächstes im Linearbetrieb betrieben wird, das Submodul mit niedrigster Temperatur herangezogen. In dieser bevorzugten Ausführungsform kann immer das Submodul Zelle die Linearregelung übernehmen, deren Temperatur die niedrigste ist. Diese Auswahllogik stellt ein einfaches Kriterium für die gleiche thermische Belastung der Submodule dar und trägt zu einer langen Lebensdauer des Stromrichters bei.

Bei einer weiteren vorteilhaften Ausgestaltungsform weist der modulare Stromrichter
- einen Gleichspannungsanschluss,
- mindestens einen wechselspannungsseitigen Anschluss und
- mindestens ein Phasenmodul auf,
wobei das Phasenmodul eine Reihenschaltung von einem ersten und einem zweiten Stromrichterventil aufweist,
wobei eine elektrische Verbindung zwischen dem ersten und dem zweiten Stromrichterventil den wechselspannungsseitigen Anschluss darstellt,
wobei die Anschlüsse des Phasenmoduls mit dem Gleichspannungsanschluss elektrisch verbunden sind,
wobei das erste und das zweite Stromrichterventil jeweils wenigstens zwei Submodule aufweisen, die elektrisch in Reihe angeordnet sind,
wobei die Submodule mindestens einen Kondensator und mindestens einen Leistungshalbleiter aufweisen. Das erfindungsgemäße Verfahren ist insbesondere für den M2C Stromrichter geeignet, der durch die oben genannten Merkmale beschrieben wird. Der Stromrichter eignet sich sowohl für Antriebsanwendungen als auch zum Anschluss an ein Energieversorgungsnetz. Die Submodule des Umrichters werden von einer Regelung angesteuert, die auf einfache Weise auch die Regelung/Steuerung des Linearbetriebs übernehmen kann. Durch die Anwendung des Verfahrens können die Aspekte der idealen Sinusform bei gleichzeitig niedrigen Verlusten auf besonders einfache Weise realisiert werden.

Bei einer weiteren vorteilhaften Ausgestaltungsform weist der modulare Stromrichter mindestens ein Submodul auf, das für den Linearbetrieb vorgesehen ist und wobei das für den Linearbetrieb vorgesehene Submodule eine besonders gute Kühlung aufweist. Dieses einzelne, linear geregelte Submodul kann mit besonders guter Kühlung versehen werden, um die relativ hohen Verluste dieser einzelnen Zelle abzuführen. Dies kann beispielsweise durch größere oder leistungsfähigere Kühlkörper realisiert werde. Eine andere Möglichkeit besteht darin, diese am Anfang eines Kühlkreises anzuordnen, bei dem das Kühlmedium wie Luft oder Wasser ohne die Vorerwärmung durch andere Komponenten noch die geringste Temperatur aufweist.

Im Folgenden wird die Erfindung anhand der in den Figuren dargestellten Ausführungsbeispiele näher beschrieben und erläutert. Es zeigt:

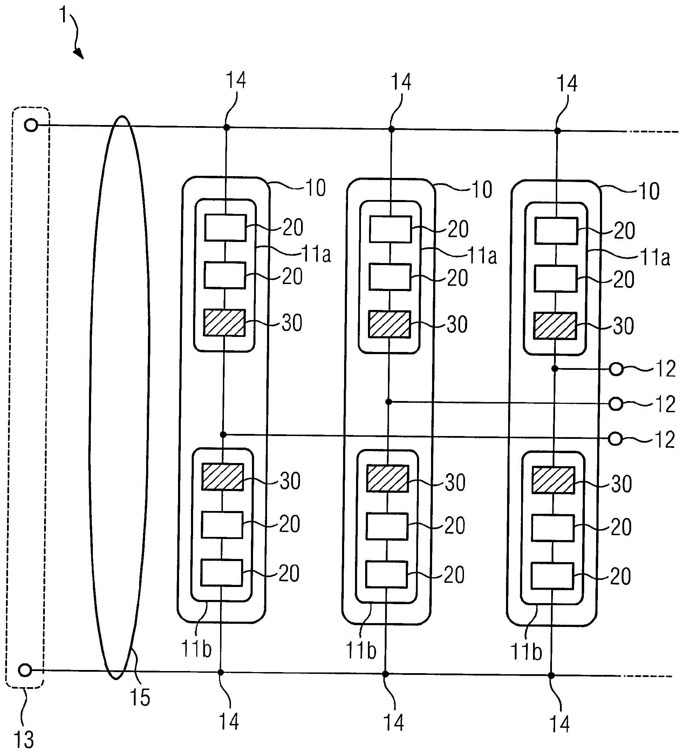

- FIG 1: ein Ausführungsbeispiel eines modularen Stromrichters mit einem für den Linearbetrieb vorgesehenem Submodul pro Stromrichterventil.

FIG 1 zeigt den Aufbau eines modularen Stromrichters 1 der als modularer Multilevelstromrichter (M2C) ausgeführt ist. Dieser ist in diesem Ausführungsbeispiel mit drei wechselspannungsseitigen Anschlüssen 12 zum Anschluss an ein dreiphasiges Energieversorgungsnetz oder an einen dreiphasigen Verbraucher ausgestaltet. Auf der Gleichspannungsseite weist dieser modulare Stromrichter 1 einen Gleichspannungsanschluss 13 auf. Der Gleichspannungsanschluss 13 umfasst einen positiven und einen negativen Anschluss. Die Phasenmodule 10 sind mit den Anschlusspunkten 14 mit dem Zwischenkreis 15 verbunden. Der Zwischenkreis 15 weist eine Stromschiene mit positivem Potential und eine Stromschiene mit negativem Potential auf. Das Phasenmodul 10 umfasst eine Reihenschaltung aus einem oberen Stromrichterventil 11a und einem unteren Stromrichterventil 11b. Die einzelnen Stromrichterventile 11a und 11b weisen eine Reihenschaltung von Submodulen 20,30 auf. Der Verbindungspunkt zwischen dem oberen Stromrichterventil 11a und dem unteren Stromrichterventil 11b stellt den wechselspannungsseitigen Anschluss 12 dar. Das Phasenmodul 10 weist in diesem Ausführungsbeispiel ein für den Linearbetrieb vorgesehenes Submodul 30 auf. Mit diesem ist es möglich, die am wechselspannungsseitigen Anschluss 12 anliegende Spannung gegenüber einem Bezugspotential oder zwischen zwei wechselspannungsseitigen Anschlüssen 12 anliegende Spannung in ihrer Qualität derart zu optimieren, dass der Oberschwingungsgehalt dieser Spannung aufgrund der Sinusform der Spannung am wechselspannungsseitigem Anschluss eliminiert wird. Dadurch kann auf den Einsatz eines Filters zur Reduktion von Oberschwingungen verzichtet werden. Es hat sich für die Regelung von Strömen als positiv erwiesen, wenn zwischen wechselspannungsseitigem Anschluss 12 und der Stromschiene mit positiven Potential wie auch zwischen wechselspannungsseitigem Anschluss 12 und Stromschiene mit negativen Potential jeweils Induktivitäten angeordnet werden. Diese sind in der FIG 1 nicht dargestellt. Ihre Aufgabe ist es, die Regelbarkeit von Strömen des modularen Multilevelstromrichters zu verbessern. Die in FIG 1 dargestellte Stromrichterschaltung 1 kann durch die Parallelschaltung weiterer Phasenmodule 10 zu den bereits vorhandenen Phasenmodulen 10 um weitere wechselspannungsseitige Anschlüsse 12 erweitert werden. Die für den Linearbetrieb vorgesehenen Submodule 30 sind jeweils in einem oberen Stromrichterventil 11a und in einem unteren Stromrichterventil 11b angeordnet. Es ist für den Betrieb der Stromrichterschaltung 1 unerheblich, an welcher Position der Reihenschaltung der Submodule 20, 30 sich das für den Linearbetrieb vorgesehene Submodul 30 innerhalb der Reihenschaltung des Stromrichterventils 11a, 11b befindet. Dadurch, dass jedes der beiden Stromrichterventile 11a, 11b in jedem Phasenmodul 10 ein für den Linearbetrieb vorgesehenes Submodul 30 aufweist, das im Betrieb des modularen Stromrichters im Linearbetrieb betrieben wird, kann die Spannung am wechselspannungsseitigen Anschluss 12 mit einem idealen Sinusverlauf realisiert werden.

## Patentansprüche

1. Verfahren zum Betreiben eines modularen Stromrichters (1) mit einer Vielzahl von Submodulen (20,30), wobei der modulare Stromrichter (1) an mindestens einem wechselspannungsseitigen Anschluss (12) eine Wechselspannung durch Schalthandlungen von Leistungshalbleitern (41) der Submodule (20,30) erzeugt, wobei mindestens ein Submodul (30) zwischen dem wechselspannungsseitigen Anschluss (12) und einem positiven Anschluss eines Zwischenkreises (15) angeordnet ist, und mindestens ein Submodul (30) zwischen dem wechselspannungsseitigen Anschluss und einem negativen Anschluss des Zwischenkreises (15) angeordnet ist,
**dadurch gekennzeichnet, dass**
das mindestens eine Submodul (30) zwischen dem wechselspannungsseitigen Anschluss (12) und dem positiven Ansschluss des Zwischenkreises (15) und das mindestens eine Submodul (30) zwischen dem wechselspannungsseitigen Anschluss und dem negativen Ansschluss des Zwischenkreises (15) im Linearbetrieb betrieben werden.

2. Verfahren zum Betreiben eines modularen Stromrichters (1) nach Anspruch 1, **dadurch gekennzeich-net**, dass die im Linearbetrieb betriebenen Submodule (30) derart angesteuert werden, dass die Spannung am wechselspannungsseitigen Anschluss (12) einen sinusförmigen Zeitverlauf annimmt.

3. Verfahren zum Betreiben eines modularen Stromrichters (1) nach einem der Ansprüche 1 oder 2, **dadurch ge-kennzeichnet**, dass eine Zuordnung, welches Submodul (30) im Linearbetrieb betrieben wird, nach wiederkehrenden Zeitpunkten durch mindestens ein Kriterium neu vorgenommen wird.

4. Verfahren zum Betreiben eines modularen Stromrichters (1) nach Anspruch 3, **dadurch gekennzeichnet, dass** die Zuordnung durch das mindestens eine Kriterium derart erfolgt, dass die Temperatur und/oder die Verlustleistung der Submodule (20,30) im zeitlichen Mittel den gleichen Wert annehmen.

5. Verfahren zum Betreiben eines modularen Stromrichters (1) nach einem der Ansprüche 3 oder 4, **dadurch ge-kennzeichnet**, dass für die Zuordnung, welches Submodul (20,30) als nächstes im Linearbetrieb betrieben wird, das Submodul (20,30) mit niedrigster Temperatur herangezogen wird.

6. Modularer Stromrichter (1) mit einer Vielzahl von Submodulen (20, 30) zur Durchführung des Verfahrens nach einem der Ansprüche 1 bis 5, wobei der modulare Stromrichter (1)
- einen Gleichspannungsanschluss (13),
- mindestens einen wechselspannungsseitigen Anschluss (12) und
- mindestens ein Phasenmodul (10) aufweist,
wobei das Phasenmodul (10) eine Reihenschaltung von einem oberen und einem unteren Stromrichterventil (11a,11b) aufweist,
wobei eine elektrische Verbindung zwischen dem oberen und dem unteren Stromrichterventil (11a,11b) den wechselspannungsseitigen Anschluss (12) darstellt,
wobei die Anschlüsse (14) des Phasenmoduls (10) mit dem Gleichspannungsanschluss (13) elektrisch verbunden sind, wobei das obere und das untere Stromrichterventil (11a,11b) jeweils wenigstens zwei Submodule (20,30) aufweisen, die elektrisch in Reihe angeordnet sind,
wobei die Submodule (20,30) mindestens einen Kondensator (42) und mindestens einen Leistungshalbleiter (21) aufweisen,
wobei der modulare Stromrichter (1) mindestens ein Submodul (30) aufweist, das für den Linearbetrieb vorgesehen ist und wobei das für den Linearbetrieb vorgesehene Submodul (30) eine besonders gute Kühlung aufweist.

7. Modularer Stromrichter (1) nach Anspruch 6, wobei das für den Linearbetrieb vorgesehene Submodul (30) am Anfang eines Kühlkreislaufes angeordnet ist.

8. Modularer Stromrichter (1) nach Anspruch 6, wobei das für den Linearbetrieb vorgesehene Submodul (30) mit einem leistungsfähigeren Kühlkörper versehen ist.

## Claims

1. Method for operating a modular current converter (1) with a multiplicity of submodules (20,30), wherein the modular current converter (1) generates an AC voltage at at least one AC voltage-side terminal (12) by switching operations of power semiconductors (41) of the submodules (20,30), wherein at least one submodule (30) is arranged between the AC voltage-side terminal (12) and a positive terminal of an intermediate circuit (15), and at least one submodule (30) is arranged between the AC voltage-side terminal and a negative terminal of the intermediate circuit (15),
**characterised in that**
the at least one submodule (30) between the AC voltage-side terminal (12) and the positive terminal of the intermediate circuit (15) and the at least one submodule (30) between the AC voltage-side terminal and the negative terminal of the intermediate circuit (15) are operated in linear operation.

2. Method for operating a modular current converter (1) according to claim 1, **characterised in that** the submodules (30) operated in linear operation are actuated in such a manner that the voltage at the AC voltage-side terminal (12) adopts a sinusoidal course over time.

3. Method for operating a modular current converter (1) according to one of claims 1 or 2, **characterised in that** an allocation of which submodule (30) is operated in linear operation is undertaken anew by way of at least one criterion after recurring points in time.

4. Method for operating a modular current converter (1) according to claim 3, **characterised in that** the allocation by way of the at least one criterion takes place such that the temperature and/or the power loss of the submodules (20,30) adopt the same value on average over time.

5. Method for operating a modular current converter (1) according to one of claims 3 or 4, **characterised in that** for the allocation of which submodule (20,30) is operated in linear operation next, use is made of the submodule (20,30) with the lowest temperature.

6. Modular current converter (1) with a multiplicity of submodules (20,30) for carrying out the method according to one of claims 1 to 5, wherein the modular current converter (1) has
- a DC voltage terminal (13),
- at least one AC voltage-side terminal (12) and
- at least one phase module (10),
wherein the phase module (10) has a series connection of an upper and a lower current converter valve (11a,11b),
wherein an electrical connection between the upper and the lower current converter valve (11a,11b) represents the AC side terminal (12),
wherein the terminals (14) of the phase module (10) are electrically connected to the DC voltage terminal (13),
wherein the upper and the lower current converter valve (11a,11b) each have at least two submodules (20,30), which are arranged electrically in series,
wherein the submodules (20,30) have at least one capacitor (42) and at least one power semiconductor (21),
wherein the modular current converter (1) has at least one submodule (30), which is provided for the linear operation and wherein the submodule (30) provided for the linear operation has a particularly effective cooling.

7. Modular current converter (1) according to claim 6, wherein the submodule (30) provided for the linear operation is arranged at the start of a cooling circuit.

8. Modular current converter (1) according to claim 6, wherein the submodule (30) provided for the linear operation is provided with a more powerful cooling element.

## Revendications

1. Procédé pour faire fonctionner un onduleur (1) modulaire, ayant une pluralité de sous-modules (20, 30), l'onduleur (1) modulaire produisant, sur au moins une borne (12), du côté de la tension alternative, une tension alternative par des manoeuvres de commutation de semi-conducteurs (41) de puissance des sous-modules (20, 30),
dans lequel au moins un sous-module (30) est monté entre la borne (12) du côté de la tension alternative et une borne positive d'un circuit (15) intermédiaire et au moins un sous-module (30) est monté entre la borne du côté de la tension alternative et une borne négative du circuit (15) intermédiaire,
**caractérisé en ce que**
on fait fonctionner, suivant un fonctionnement linéaire, le au moins un sous-module (30) entre la borne (12) du côté de la tension alternative et la borne positive du circuit (15) intermédiaire et le au moins un sous-module (30) entre la borne du côté de la tension alternative et la borne négative du circuit (15) intermédiaire.

2. Procédé pour faire fonctionner un onduleur (1) modulaire suivant la revendication 1, **caractérisé en ce que** l'on commande les sous-modules (30) fonctionnant suivant un fonctionnement linéaire, de manière à ce que la tension à la borne (12) du côté de la tension alternative suive une courbe sinusoïdale dans le temps.

3. Procédé pour faire fonctionner un onduleur (1) modulaire suivant l'une des revendications 1 ou 2, **caractérisé en ce que** l'on effectue à nouveau, par au moins un critère, à des instants récurrents dans le temps, une affectation du sous-module (30), qui doit fonctionner en fonctionnement linéaire.

4. Procédé pour faire fonctionner un onduleur (1) modulaire suivant la revendication 3, **caractérisé en ce que** l'on effectue l'affectation par le au moins un critère, de manière à ce que la température et/ou la puissance perdue des sous-modules (20, 30) prenne la même valeur en moyenne dans le temps.

5. Procédé pour faire fonctionner un onduleur (1) modulaire suivant la revendication 3 ou 4, **caractérisé en ce que**, pour l'affectation du sous-module (20, 30), qui doit fonctionner immédiatement ensuite suivant un fonctionnement linéaire, on prend le sous-module (20, 30) ayant la température la plus basse.

6. Onduleur (1) modulaire, ayant une pluralité de sous-modules (20, 30) pour effectuer le procédé suivant l'une des revendications 1 à 5, l'onduleur (1) modulaire ayant
- une borne (13) de tension continue,
- au moins une borne (12) du côté de la tension alternative et
- au moins un module (10) de phase,
dans lequel le module (10) de phase a un circuit série d'une soupape (11a) d'onduleur supérieure et d'une soupape (11b) d'onduleur inférieure,
dans lequel une liaison électrique, entre la soupape (11a) d'onduleur supérieure et la soupape (11b) d'onduleur inférieure, représente la borne (12) du côté de la tension alternative,
dans lequel les bornes (14) du module (10) de phase sont reliées électriquement à la borne (13) de tension continue, dans lequel la soupape (11a) d'onduleur supérieure et la soupape (11b) d'onduleur inférieure ont chacune au moins deux sous-modules (20, 30), qui sont montés en série du point de vue électrique,
dans lequel les sous-modules (20, 30) ont au moins un condensateur (42) et au moins un semi-conducteur (21) de puissance,
dans lequel l'onduleur (1) modulaire a au moins un sous-module (30) prévu pour le fonctionnement linéaire et dans lequel le sous-module (30) prévu pour le fonctionnement linéaire a un refroidissement particulièrement bon.

7. Onduleur (1) modulaire suivant la revendication 6, dans lequel le sous-module (30) prévu pour le fonctionnement linéaire est disposé au début d'un circuit de refroidissement.

8. Onduleur (1) modulaire suivant la revendication 6, dans lequel le sous-module (30) prévu pour le fonctionnement linéaire est pourvu d'un puits de chaleur assez puissant.
